# EUROPÄISCHE PATENTSCHRIFT

(11) **EP 1 479 550 B1**
(45) Veröffentlichungstag und Bekanntmachung des Hinweises auf die Patenterteilung: **04.10.2006**
(21) Anmeldenummer: 03291218.0
(22) Anmeldetag: 21.05.2003
(51) Int. Cl.: B60H 3/06, B60H 1/00

(54) **Zweikanalige Klimaanlage sowie Filterelement für eine solche Klimaanlage**
Two-channel air conditioner and filter for such an air conditioner
Climatisation à deux canaux et filtre pour une telle climatisation

(43) Veröffentlichungstag der Anmeldung: 24.11.2004
(73) Patentinhaber: Behr France Rouffach SAS, 68250 Rouffach (FR)
(72) Erfinder: Schlachter, Claude, 68480 Wolschwiller (FR)
(74) Vertreter: Grauel, Andreas

(56) Entgegenhaltungen:
- EP-A- 1 092 573
- EP-A- 1 247 669
- WO-A-97/00178
- WO-A-99/12756
- DE-A- 10 015 256

## Beschreibung

Die vorliegende Erfindung betrifft eine zweikanalige Klimaanlage für ein Fahrzeug sowie ein Filterelement für eine derartige zweikanalige Klimaanlage. Bei zweikanaligen Klimaanlagen wird die Klimatisierung zweier Fahrzeughalbseiten voneinander getrennt, so dass in diesen auf unterschiedliche Temperaturen und Temperaturschichtungen erzeugbar sind. Ein großes Problem derartiger Anordnungen ist es, dass die Luftzuströmung und die Temperaturmischung auf beiden Fahrzeughalbseiten in gleicher Weise und gleichmäßig erfolgen soll. Hierzu muss in dem Verteilerkasten, der der Aufteilung des Luftstromes in die beiden Teilströme, welche den jeweiligen Fahrzeugseiten zugeordnet sind, dient, der ausströmende Luftstrom möglichst gleichmäßig anströmen und definiert temperiert sein. Dem steht entgegen, dass das Gebläse in der Regel ein Radiallüfter - meist seitlich neben dem Strömungskanal, der zum Verteilerkasten führt, angeordnet ist, so dass der Luftstrom quer zu der Abströmrichtung in den zum Verteilerkasten führenden Strömungskanal einströmt.

Um eine gleichmäßige Luftströmung im Verteilungskasten zu erreichen, ist es bekannt, den stirnseitigen Anströmkanal des Luftstromes in den Strömungskanal, welcher sich als frontaler Abschluss des Anströmkanales quer über denselben erstreckt, entsprechend profiliert zu formen, um eine angepasste Umlenkung sowie ein optimiertes Strömungsprofil des anströmenden Luftstromes aus der quer zur Durchströmrichtung des Strömungskanal liegenden Anströmrichtung vom Gebläse weg zu erreichen.

Eine derartige Klimaanlage ist aus dem Gattungsgemäßen Dokument EP 1247669 bekannt.

Dabei ist es insbesondere möglich, eine gestufte Kontur an der den Strömungskanal nach vorne begrenzenden Stirnwand auszubilden. Der Anströmkanal wird dann einerseits durch die Stirnwand und andererseits, zum Strömungskanal hin durch einen flächigen, eben ausgerichteten Filter begrenzt.

Derartige Konstruktionen haben den Vorteil, dass eine äußerst gleichmäßige Verteilung der Luftströmung der anströmenden Luft auf den Filter und somit im Strömungskanal und dem dahinterliegenden Verteilerkasten erreicht wird. Dabei ist in der Regel stromabwärts des Filters noch ein Verdampfer angeordnet, der der thermischen Konditionierung der in den dahinter liegenden Verteilerkasten einströmenden Luft dient. In den beiden Kanälen der Klimaanlage wird dann weiter stromabwärts jeder der beiden im Verteilerkasten erzeugten, einen gleichen Volumenstrom aufweisenden Teilströme durch Erwärmen über je einen gesonderten Wärmetauscher jeweils auf die Temperatur gebracht, die in der entsprechend zugeordneten Fahrzeughalbseite eingetragen werden soll.

Eine solche Ausbildung der Luftführung zweikanaliger Klimaanlagen hat den Vorteil sehr kompakter, äußerst effizienter Bauweise. Andererseits ist aber der Nachteil gegeben, dass aufgrund der asymmetrischen Bauweise unterschiedliche Versionen für Rechtslenker- und Linkslenkerfahrzeuge erforderlich werden. Die Anordnung des Gebläses ist von dem Aufbau des Fahrzeuges abhängig und kann nur auf einer der beiden Seiten erfolgen, wobei dies in der Regel die Seite ist, auf der der Fahrer nicht sitzt, da in diesem Bereich die Durchbrüche für Lenker und Pedale und der entsprechenden Kahelführungen angeordnet sind. Deshalb ist das Gebläse bei einem Rechtslenkfahrzeug auf der linken Seite des Strömungskanals und bei Linkslenkerfahrzeugen auf der rechten Seite des Strömungskanals vorzusehen. Die asymmetrische Ausbildung erfordert daher unterschiedliche Teile für diese unterschiedlichen Fahrzeugtypen, was zum einen einen größeren Werkzeugeaufwand und zum anderen eine größere Teilevielfalt zur Folge hat, so dass durch diese beiden Faktoren eine Produktverteuerung erfolgt.

Demgegenüber ist es Aufgabe der Erfindung eine zweikanalige Klimaanlage bereitzustellen, die für Rechts- und Linkslenkerfahrzeuge identisch aufgebaut ist und dennoch eine gleichmäßige Verteilung des Luftstromes auf die beiden Teilströme im Verteilerkasten ermöglicht.

Diese Aufgabe wird durch eine zweikanalige Klimaanlage gemäß der Erfindung gelöst. Ein Filterelement gemäß der Erfindung kann dabei in vorteilhafter Weise Verwendung finden.

Eine zweikanalige Klimaanlage für Fahrzeuge weist ein Gebläse wie einen Radiallüfter auf, das einem Strömungskanal einen Luftstrom zuführt, wobei dieser Luftstrom quer zur Abströmrichtung innerhalb des Strömungskanales ausgerichtet ist. Im Strömungskanal ist dabei ein Filterelement zum Reinigen der anströmenden Luft angeordnet. Gemäß der Erfindung ist die Klimaanlage im Bereich des Strömungskanals hinsichtlich ihrer Mittelachse bzw. Mittelebene spiegelsymmetrisch ausgebildet, wobei das Filterelement im Strömungskanal so angeordnet ist, dass sich der über die Filterfläche des Filterelements ergebende Anströmkanal vom Gebläse quer zur Erstreckung des Strömungskanals verjüngt.

Durch das erfindungsgemäße Anordnen des Filterelements in einem symmetrisch ausgebildeten Strömungskanal wird eine gleichmäßige Verteilung des Luftstromes innerhalb des Strömungskanals und damit auch eine gleichmäßige Luftverteilung auf die beiden Kanäle der Klimaanlage stromabwärts ermöglicht. Dabei kommt es nicht nur darauf an, dass der Volumenstrom der Gleiche ist, sondern auch darauf, dass der Gradient der Strömungsgeschwindigkeit über die Breite des Strömungskanales hinweg möglichst gering ist. Durch die Verwendung eines symmetrisch aufgebauten Gehäuses wird die wahlweise Anordnung des Gebläses an einer der beiden Seiten des Gehäuses, das den Strömungskanal begrenzt, ermöglicht, so dass auch für Rechtslenker- und Linkslenkerversionen des Fahrzeugs gleichermaßen ausgebildete Strömungskanäle verwendet werden können. An dem Gehäuse ist dann vorzugsweise auf beiden Seiten jeweils ein Durchbruch zum Anschließen des vom Gebläse wegführenden Strömungsbereiches ausgebildet, wobei der andere dann durch einen einfachen Deckel möglichst luftdicht verschlossen wird.

Gemäß bevorzugter weiterführender Ausgestaltung der Erfindung wird der Strömungskanal stromaufwärts des quer einströmenden Luftstroms durch eine Stirnwand begrenzt, welche bezüglich der Mittelachse des Strömungskanals symmetrisch ausgebildet ist.

Eine weitere vorteilhafte Ausgestaltung der Erfindung sieht vor, dass das Filterelement eine gekrümmte Kontur aufweist und bezüglich der Mittelachse des Strömungskanals nicht spiegelsymmetrisch in demselben angeordnet ist. Durch diese Kontur des Filterelements wird es weiter ermöglicht, die Anströmung des Filterelements durch den Luftstrom so auszugestalten, dass stromabwärts des Filterelements über die gesamte Breite des Strömungskanals hinweg eine laminare Strömung möglichst gleicher Strömungsgeschwindigkeit herrscht. Die Maßnahme des Filterelements spiegelsymmetrisch auszubilden und anzuordnen ist dabei unabhängig von der Gestaltung der Stirnwand.

Gemäß bevorzugter Ausgestaltung weist das Filterelement hierzu eine Knickachse auf, längs derer es abknickbar ist, so dass das Filterelement nicht mehr plan oder eben ist. Aber auch eine schräg stehende Ausrichtung des Filterelements und eine im Übrigen plane Ausbildung ist denkbar. Die Knickachse verläuft dabei gemäß bevorzugter Ausgestaltung längs einer Faltstelle eines Faltenbalges, welcher das Filtermedium des Filterelements bildet. Dabei sind die Falzstellen des Faltenbalges vorzugsweise linear ausgerichtet und verlaufen in der Richtung einer der beiden Hauptachsen, die durch den Querschnitt des Strömungskanals definiert werden und senkrecht zur Mittelachse ausgerichtet sind. Es ist möglich, dass ein Filterelement mehrere Schwenkachsen aufweist, wobei diese dann vorzugsweise alternierend auf den in Strömungsrichtung gesehen voneinander verschiedenen Seiten des Filterelements angeordnet sind. Dadurch kann ein abgewinkeltes Profil von einzelnen der durch die Knickstellen voneinander getrennten Segmente des Filterelements ermöglicht werden, wobei ein Teil der Segmente gleich ausgerichtet sind.

Ein Filterelement, das derartige Knickstellen aufweist, kann als ebenes, planes Element hergestellt und transportiert werden, wobei ein angepasstes Abknicken des Filterelementes entweder vor oder beim Einsetzen in den Strömungskanal erfolgt, wobei hierzu insbesondere angepasste Anlageflächen im Strömungskanal vorgesehen sind bzw. das Filterelement in einen angepassten Filterrahmen eingesetzt wird, welcher selbst im Strömungskanal befestigbar ist. Ein Filterelement kann für die Ausführungsform für Linkslenkerfahrzeuge und Rechtslenkerfahrzeuge identisch sein, da es nur spiegelverkehrt im Strömungskanal 12 eingesetzt werden muss. Dabei ist es von Vorteil, wenn die Knickstellen des Filterelements bezüglich der Mittelachse des Filterelements in der Anordnung im Strömungskanal spiegelsymmetrisch ausgebildet ist.

Ein Filterelement, mit den oben genannten Eigenschaften ist also besonders ausgebildet, um im Rahmen der Erfindung Verwendung zu finden.

Im Übrigen ist die Erfindung anhand der in der Zeichnung dargestellten Ausführungsbeispiele näher erläutert; dabei zeigt:
- Fig. 1: einen Bereich einer zweikanaligen Klimaanlage gemäß dem Stand der Technik;
- Fig. 2a: einen Bereich des Strömungskanals, wobei ein Filterelement mit einer Knickstelle Verwendung findet;
- Fig. 2b: einen Bereich des Strömungskanals gem. Fig. 2a mit Anströmung und Anordnung des Gebläses auf der anderen Seite der Mittelachse, und
- Fig. 3: einen entsprechenden Ausschnitt einer schematischen Darstellung einer zweikanaligen Klimaanlage mit einem Filterelement, das zwei Knickstellen aufweist.

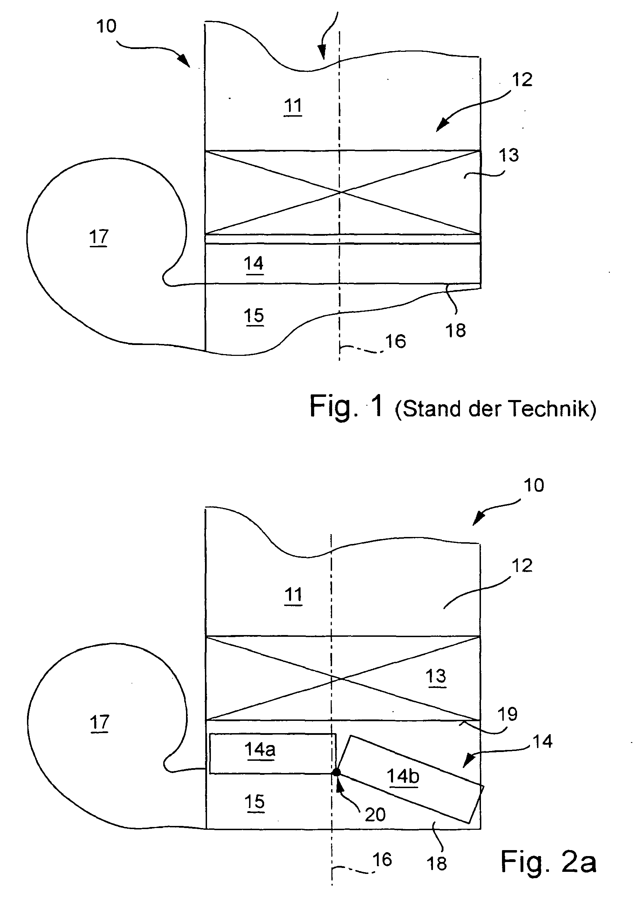

Die Fig. 1, 2a, 2b und 3 zeigen unterschiedliche schematische Schnittdarstellungen durch eine Klimaanlage eines Fahrzeugs im Bereich der Strömungsführung stromaufwärts des Verteilungskastens 11 der zweikanaligen Klimaanlage 10. Als wesentliche Funktionselemente sind dabei in allen zweikanaligen Klimaanlagen 10 jeweils der Strömungskanal 12 stromaufwärts des Verteilerkastens 11, der im Strömungskanal angeordnete Verdampfer, sowie stromaufwärts des Verdampfers der ebenfalls im Strömungskanal 12 angeordnete Filter 14 gezeigt. Stromaufwärts des Filters 14 befindet sich der Anströmkanal 15, durch den die vom Gebläse 17 zugeführte Luft quer zur Erstreckungsrichtung des Strömungskanals 12 einströmt. Dabei sind der Strömungskanal 12 und der Verdampfer spiegelsymmetrisch bezüglich der Mittelachse des Strömungskanals 12 ausgebildet. Eine Stirnwand 18 begrenzt den Anströmkanal 15 auf der dem Filter gegenüberliegenden Seite des zuströmenden Luftstroms und schließt dabei das Gehäuse ab, welches den Strömungskanal 12 begrenzt, so dass die zuströmende Luft nur durch den Filter entlang des Strömungskanal abströmen kann. Insoweit entspricht der Aufbau in den Figuren 1 bis 3 jeweils einander.

Die Fig. 1 zeigt den Aufbau eines entsprechenden Bereiches einer zweikanaligen Klimaanlage gemäß dem Stand der Technik. Das Gebläse 17 ist an einer Seite des Strömungskanals 12 angeordnet und lässt die anströmende Luft in den Anströmkanal 15 quer zur Mittelachse oder Mittelebene 16 des Strömungskanals 12 ein. Die Stirnwand 18 dient der Lenkung des Luftstromes im Anströmkanal 15 so, dass die Durchströmung des Strömungskanales stromabwärts des Filters 14 über die gesamte Breite des Strömungskanales hinweg homogen ausgebildet ist.

Die Fig. 2a zeigt den der Fig. 1 entsprechenden Ausschnitt der Klimaaanlage 10 stromaufwärts des Verteilerkastens 11, welcher sich an den Strömungskanal 12 anschließt, in dem der Verdampfer 13 und das Filterelement 14 angeordnet sind. Die Stirnwand 18 ist, wie der gesamte Strömungskanal 12 bezüglich der Mittelachse 16 spiegelsymmetrisch ausgebildet. Die Stirnwand 18 verläuft dabei insbesondere parallel zu einer sich senkrecht bezüglich der Mittelachse 16 erstreckenden Ebene, wie sie beispielsweise durch die Vorderkante 19 des Verdampfers 13 definiert wird. Es ist, entgegen der in der Zeichnung dargestellten Ausführungsform, auch möglich, dass die Stirnwand 18 sich von den Seiten zur Mittelachse 16 hin so erstreckt, dass der Abstand zu der Vorderkante 19 im Bereich der Mittelachse 16 geringer ist als im Bereich der Seite. Gleichzeitig ist darauf zu achten, dass dennoch die Symmetrie bezüglich der Mittelachse 16 gewahrt bleibt. Auf einer der beiden Seiten des Strömungskanals 12 ist das Gebläse 17 angeordnet, das die anströmende Luft in den Anströmkanal 15 quer zur Mittelachse 16 einbläst. Zum Erzeugen eines gleichmäßigen Luftstromes im Bereich des Strömungskanals 12 stromabwärts des Filterelements 14 ist dieses längs einer Knickachse 20 abgeknickt, so dass das Filterelement 14 in zwei Segmente 14a und 14b geteilt ist und das Filterelement insgesamt so im Strömungskanal 12 angeordnet ist, dass sich der Anströmkanal 15 über die Filterfläche hinweg verjüngt. Durch diese Maßnahme wird stromabwärts des Filterelements 14 eine weitgehend homogene Verteilung des abströmenden Luftstromes durch den Strömungskanal 12 hindurch erreicht.

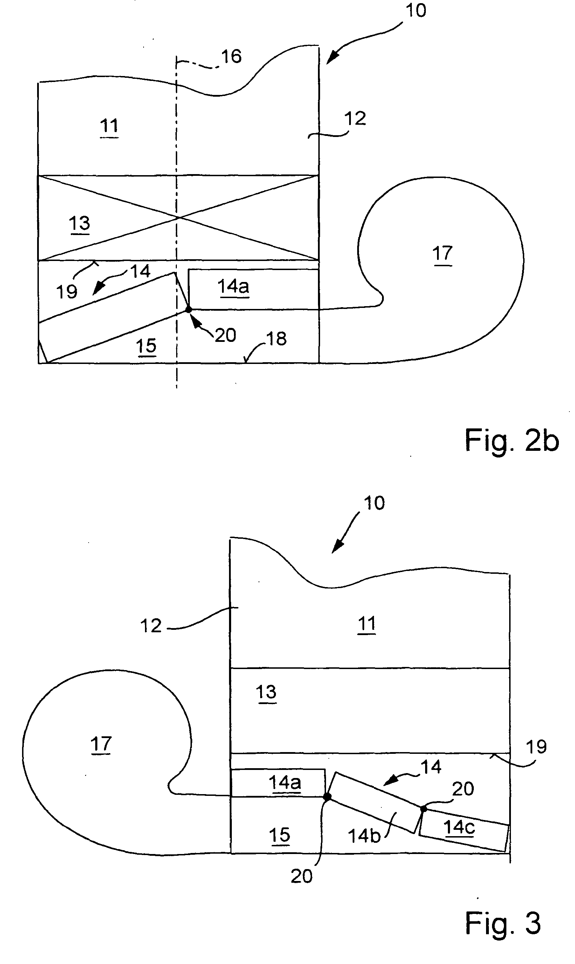

Bei dieser Ausführungsform kann das Gebläse sowohl auf der gezeigten linken Seite des Strömungskanals 12 angeordnet werden als auch auf der rechten Seite (Fig. 2b). Bei einer Anordnung auf der rechten Seite muss nur das Filterelement um 180° verdreht im Strömungskanal 12 angeordnet werden, um eine entsprechende Geometrie zu erreichen. Diese spiegelsymmetrische Ausbildung ist in der Fig. 2b dargestellt, die im Übrigen der Ausführungsform der Fig. 2a entspricht. Der Vorteil dieser erfindungsgemäßen Ausgestaltung der zweikanaligen Klimaanlage ist darin zu sehen, dass unabhängig davon, ob das Fahrzeug ein Rechtslenker- oder ein Linkslenkerfahrzeug ist, die gleichen Bauteile verwendet werden können. Weder Gebläse 17, Strömungskanal 12, die Stirnwand 18 noch Filterelement 14 müssen in unterschiedlichen Varianten hergestellt und bevorratet werden. Lediglich das Montieren des Gebläses und das Einsetzen des Filterelementes erfolgt unterschiedlich.

Die Fig. 3 zeigt eine alternative Ausführungsform, bei welcher im Unterschied zu den Ausführungsformen der Fig. 2a und 2b das Filterelement nicht nur eine sondern zwei Knickstellen 20 aufweist, wobei eine der Knickstellen anströmseitig und die andere der Knickstellen abströmseitig des Filterelements ausgebildet ist, so dass das Filterelement 14 insgesamt in drei Segmente 14a, 14b und 14c aufgeteilt ist, die eine jeweils unterschiedliche Ausrichtung innerhalb des Strömungskanals 12 aufweisen können. Durch diese Maßnahme wird es ermöglicht, dass das Verjüngen des Anströmkanals 15 stromaufwärts des Filterelements 14 hinsichtlich des Erzeugens eines laminaren, über die gesamte Breite des Strömungskanals 14 hinweg gleichmäßige Luftströmung zu erreichen, optimiert ist. Durch Vergrößern der Anzahl der Knickstellen wird die Kontur des Filterelements variabler, so dass eine verbesserte Strömungsführung ermöglicht wird. Im Übrigen entspricht die zweikanalige Klimaanlage der Fig. 3 der der Fig. 2a und 2b.

## Patentansprüche

1. Zweikanalige Klimaanlage für Fahrzeuge, mit einem Gebläse zum Zuführen eines Luftstromes in einen Strömungskanal, der sich quer zur Abströmrichtung des Gebläses erstreckt und ein Filterelement zum Reinigen der anströmenden Luft beinhaltet, wobei
die Klimaanlage (10) im Bereich des Strömungskanals (12) und seiner Anströmung bezüglich seiner Mittelachse (16) spiegelsymmetrisch ausgebildet ist, **dadurch gekennzeichnet, dass** das Filterelement (14) derart angeordnet ist, dass sich der über die Filterfläche ergebende Anströmkanal (15) verjüngt.

2. Zweikanalige Klimaanlage nach Anspruch 1,
**dadurch gekennzeichnet,**
**dass** das Gebläse (17) wahlweise an einer der beiden Seiten des Strömungskanals (12) angeordnet ist, wobei die andere Seite vorzugsweise durch einen Abschluss verschlossen ist.

3. Zweikanalige Klimaanlage nach einem der Ansprüche 1 oder 2,
**dadurch gekennzeichnet,**
**dass** der Strömungskanal (12) stromaufwärts des quer einströmenden Luftstromes durch eine Stirnwand (18) begrenzt wird, wobei die Stirnwand (18) bezüglich der Mittelachse (16) des Strömungskanals (12) symmetrisch ausgebildet ist.

4. Zweikanalige Klimaanlage nach einem der vorangegangenen Ansprüche,
**dadurch gekennzeichnet,**
**dass** das Filterelement (14) eine gekrümmte Kontur aufweist und bezüglich der Mittelachse (16) nicht spiegelsymmetrisch ausgerichtet gehalten ist.

5. Zweikanalige Klimaanlage nach einem der vorangegangenen Ansprüche,
**dadurch gekennzeichnet,**
**dass** das Filterelement (14) wenigstens eine Knickachse (20) aufweist, an dem es abknickbar ist.

6. Zweikanalige Klimaanlage nach Anspruch 5,
**dadurch gekennzeichnet,**
**dass** das Filterelement (14) mehrere Knickachsen (20) aufweist, wobei die Schwenkzentren der Knickachsen (20) jeweils alternierend auf den Seiten des Filterelements (14) ausgebildet sind.

7. Zweikanalige Klimaanlage nach Anspruch 5 oder 6,
**dadurch gekennzeichnet,**
**dass** das Filterelement (14) ein Filtermedium aufweist, das zu einem Faltenbalg gefaltet ist, wobei sich die Schwenkachsen in Faltstellen des Faltenbalges befinden.

8. Filterelement für zweikanalige Klimaanlagen, insbesondere nach einem der vorangegangenen Ansprüche,
**dadurch gekennzeichnet,**
**dass** das Filterelement (14) aus einem Filtermedium und einem das Filterelement (14) umschließenden Filterrahmen gebildet wird, wobei das Filtermedium und der Filterrahmen Knickstellen zum Abwinkeln aufweist, die wenigstens eine Schwenkachse definieren.

9. Filterelement nach Anspruch 8,
**dadurch gekennzeichnet,**
**dass** das Filtermedium zu einem Faltenbalg gefaltet ist, wobei die Schwenkachsen in Faltstellen des Faltenbalgs verlaufen.

10. Filterelement nach einem der Ansprüche 8 oder 9,
**dadurch gekennzeichnet,**
**dass** das Filterelement (14) mehrere Knickachsen aufweist, wobei die Schwenkzentren der Knickachsen jeweils alternierend auf den Seiten des Filterelements (14) ausgebildet sind.

## Claims

1. Two-channel air conditioner for vehicles, with a fan for supplying an airflow to a flow channel extending at right angles to the discharge direction of the fan and incorporating a filter element for cleaning the approaching air, wherein the air conditioner (10) is designed mirror-symmetrical relative to its central axis (16) in the area of the flow channel (12) and the approaching air,
**characterised in that**
the filter element (14) is arranged such that the approach channel (15) across the filter surface is tapered.

2. Two-channel air conditioner according to claim 1,
**characterised in that**
the fan (17) is optionally located on either side of the flow channel (12), the other side being preferably sealed by a closure.

3. Two-channel air conditioner according to claim 1 or 2,
**characterised in that**
the flow channel (12) is bounded by an end wall (18) upstream of the transversely approaching airflow, the end wall (18) being designed symmetrical relative to the central axis (16) of the flow channel (12).

4. Two-channel air conditioning system according to any of the preceding claims,
**characterised in that**
the filter element (14) has a curved contour and is not aligned to be mirror-symmetrical relative to the central axis (16).

5. Two-channel air conditioning system according to any of the preceding claims,
**characterised in that**
the filter element (14) has at least one buckling axis (20) about which it can be folded.

6. Two-channel air conditioner according to claim 5,
**characterised in that**
the filter element (14) has a plurality of buckling axes (20), the pivots of the buckling axes (20) being located on alternate sides of the filter element (14).

7. Two-channel air conditioner according to claim 5 or 6,
**characterised in that**
the filter element (14) incorporates a filter medium folded to form a bellows, the pivot axes being located in the folds of the bellows.

8. Filter element for two-channel air conditioners, in particular according to any of the preceding claims,
**characterised in that**
the filter element (14) comprises a filter medium and a filter frame enclosing the filter element (14), the filter medium and the filter frame having buckling points for folding, which define at least one pivot axis.

9. Filter element according to claim 9,
**characterised in that**
the filter medium is folded to form a bellows, the pivot axes being located in the folds of the bellows.

10. Filter element according to claim 8 or 9,
**characterised in that**
the filter element (14) has a plurality of buckling axes, the pivots of the buckling axes being located on alternate sides of the filter element (14).

## Revendications

1. Dispositif de climatisation à deux canaux pour véhicules automobiles, comportant une soufflerie pour acheminer un flux d'air dans un conduit de circulation qui est orienté perpendiculairement au sens d'évacuation de la soufflerie, et un élément de filtre destiné à épurer l'air affluant,
le dispositif de climatisation (10) étant réalisé symétriquement par rapport à son axe médian (16) dans la zone du conduit de circulation (12) et de son admission,
**caractérisé en ce que** l'élément de filtre (14) est agencé de telle sorte que le conduit d'admission (15), obtenu par l'intermédiaire de la surface du filtre, se rétrécit.

2. Dispositif de climatisation à deux canaux selon la revendication 1, **caractérisé en ce que** la soufflerie (17) est agencée au choix sur l'un des deux côtés du conduit de circulation (12), l'autre côté étant de préférence fermé par un obturateur.

3. Dispositif de climatisation à deux canaux selon la revendication 1 ou 2, **caractérisé en ce que** le conduit de circulation (12) est délimité par une paroi frontale (18) en amont du flux d'air affluant perpendiculairement, la paroi frontale (18) étant réalisée symétriquement par rapport à l'axe médian (16) du conduit de circulation (12).

4. Dispositif de climatisation à deux canaux selon l'une quelconque des revendications précédentes, **caractérisé en ce que** l'élément de filtre (14) présente un contour coudé et n'est pas fixé en étant orienté symétriquement par rapport à l'axe médian (16).

5. Dispositif de climatisation à deux canaux selon l'une quelconque des revendications précédentes, **caractérisé en ce que** l'élément de filtre (14) comporte au moins un axe de flexion (20), au niveau duquel il peut être plié.

6. Dispositif de climatisation à deux canaux selon la revendication 5, **caractérisé en ce que** l'élément de filtre (14) comporte plusieurs axes de flexion (20), les centres de pivotement des axes de flexion (20) étant réalisés respectivement en alternance sur les côtés de l'élément de filtre (14).

7. Dispositif de climatisation à deux canaux selon la revendication 5 ou 6, **caractérisé en ce que** l'élément de filtre (14) comporte un milieu de filtrage qui est plié sous forme de soufflet, les axes de pivotement étant situés dans les zones de pliage du soufflet.

8. Élément de filtre pour dispositifs de climatisation à deux canaux, en particulier selon l'une quelconque des revendications précédentes, **caractérisé en ce que** l'élément de filtre (14) est formé par un milieu de filtrage et un cadre entourant l'élément de filtre (14), le milieu de filtrage et le cadre comportant des zones de flexion pour former un coude, lesquelles définissent au moins un axe de pivotement.

9. Élément de filtre selon la revendication 8, **caractérisé en ce que** le milieu de filtrage est plié sous forme de soufflet, les axes de pivotement passant dans des zones de pliage du soufflet.

10. Élément de filtre selon la revendication 8 ou 9, **caractérisé en ce que** l'élément de filtre (14) comporte plusieurs axes de flexion, les centres de pivotement des axes de flexion étant réalisés respectivement en alternance sur les côtés de l'élément de filtre (14).
